Europäisches Patentamt

European Patent Office

Office européen des brevets

(19)

(11) **EP 0 850 535 B1**

(12) **EUROPÄISCHE PATENTSCHRIFT**

(45) Veröffentlichungstag und Bekanntmachung des Hinweises auf die Patenterteilung:
**24.03.1999 Patentblatt 1999/12**

(21) Anmeldenummer: **96943843.1**

(22) Anmeldetag: **27.08.1996**

(51) Int Cl.[6]: **H04N 1/191**

(86) Internationale Anmeldenummer:
**PCT/DE96/01586**

(87) Internationale Veröffentlichungsnummer:
**WO 97/10671 (20.03.1997 Gazette 1997/13)**

(54) **VERFAHREN ZUM WEISSABGLEICH**

WHITE BALANCE PROCESS

PROCEDE D'EQUILIBRAGE DES BLANCS

(84) Benannte Vertragsstaaten:
**DE FR GB IT**

(30) Priorität: **14.09.1995 DE 19534074**

(43) Veröffentlichungstag der Anmeldung:
**01.07.1998 Patentblatt 1998/27**

(73) Patentinhaber: **Heidelberger Druckmaschinen Aktiengesellschaft**
**69115 Heidelberg (DE)**

(72) Erfinder:
• **HEUER, Axel**
**D-24253 Fahren (DE)**

• **SUHR, Holger**
**D-24149 Kiel (DE)**

(56) Entgegenhaltungen:
EP-A- 0 254 235        WO-A-90/04900
US-A- 4 861 994        US-A- 5 237 172

• PATENT ABSTRACTS OF JAPAN vol. 16, no. 178 (E-1196), 28.April 1992 & JP 04 021266 A (RICOH), 24.Januar 1992,
• PATENT ABSTRACTS OF JAPAN vol. 17, no. 287 (E-1374), 2.Juni 1993 & JP 05 014712 A (RICOH)

**Beschreibung**

Die Erfindung bezieht sich auf das Gebiet der elektronischen Reproduktionstechnik und betrifft ein Verfahren zum Weißabgleich bei Abtastgeräten zur punkt- und zeilenweisen Abtastung von Bildvorlagen mittels eines optoelektronischen Abtastorgans. Die Abtastgeräte, auch Scanner genannt, können Schwarz/Weiß-Scanner zur Abtastung von schwarzweißen Bildvorlagen oder Farbscanner zur Abtastung von farbigen Bildvorlagen sein.

Bei einem Schwarz/Weiß-Scanner wird eine schwarzweiße Bildvorlage von einer Lichtquelle bildpunktweise beleuchtet und das entsprechend den Helligkeitswerten der abgetasteten Bildpunkte modulierte Abtastlicht mittels eines optoelektronischen Wandlers in ein Bildsignal umgewandelt, welches die Helligkeitswerte zwischen "Schwarz" und "Weiß" repräsentiert.

Bei einem Farbscanner wird das von der farbigen Bildvorlage kommende Abtastlicht zunächst mittels dichroitischer Filter in die Farbanteile "Rot", "Grün" und "Blau" zerlegt und den einzelnen Farbkanälen zugeführt, in denen dann die drei Farbanteile des Abtastlichtes mittels optoelektronischer Wandler in die Farbsignale für "Rot", "Grün" und "Blau" umgewandelt werden.

Die Bildsignale bzw. Farbsignale werden in A/D-Wandlern digitalisiert und die dabei gewonnenen digitalen Bildwerte bzw. Farbwerte on-line weiterverarbeitet oder vor der Weiterverarbeitung zwischengespeichert. Die den optoelektronischen Wandlern nachgeschalteten Signalaufbereitungs-Stufen weisen einen definierten Aussteuerungsbereich auf, dessen maximaler Signalwert mit Weißpegel bezeichnet wird.

Durch einen Weißabgleich eines Scanners vor Abtastbeginn wird der Dichteumfang der jeweils abzutastenden Bildvorlage an den definierten Aussteuerungsbereich der Signalaufbereitungs-Stufen angepaßt, indem das von der hellsten Stelle der Bildvorlage, dem Weißpunkt, kommende Abtastlicht in dem optoelektronischen Wandler in einen Bildsignalwert umgesetzt wird, der dem Weißpegel entspricht. Da das von der hellsten Stelle der Bildvorlage kommende Abtastlicht von Bildvorlage zu Bildvorlage variiert und die Empfindlichkeit des optoelektronischen Wandlers über einen längeren Zeitraum nicht konstant ist, wird in der Praxis vor jeder Vorlagenabtastung ein entsprechender Weißabgleich durchgeführt, der insbesondere bei Farbscannern aufwendig ist, da dort mindestens drei optoelektronische Wandler abzugleichen sind.

In der DE-A-25 45 961 wird bereits ein Verfahren zum automatischen Weiß-Abgleich bei Schwarz/Weiß-Scannern und bei Farbscannern angegeben. In einer Eichphase wird das Abtastorgan eines Schwarz/Weiß-Scanners auf dem jeweiligen Weißpunkt der Bildvorlage positioniert und das vom angefahrenen Weißpunkt kommende Abtastlicht in dem optoelektronischen Wandler in einen Bildsignal-Istwert umgesetzt. Der Bildsignal-Istwert wird in einer Regelungseinrichtung mit einem Bildsignal-Sollwert verglichen, der dem definierten Weißpegel entspricht. Ein Steuersignal ändert die Verstärkung des optoelektronischen Wandlers und/oder eines nachgeschalteten Verstärkers solange, bis die Regelabweichung Null ist. Der dazu notwendige Steuersignalwert wird für die Dauer der sich an die Eichphase anschließende Vorlagenabtastung gespeichert. Zum Weißabgleich bei Farbscannern wird die Regeleinrichtung auf die drei Farbkanäle erweitert

Das bekannte Verfahren hat den Nachteil, daß beim Weißabgleich immer ein entsprechender Weißpunkt auf der zu reproduzierenden Bildvorlage mit dem Abtastorgan angefahren werden muß, was zeitraubend und ungenau ist, insbesondere bei Wiederholungen des Weißabgleiches. Hinzu kommt, daß in einer Farbvorlage oft keine als Weißpunkt geeignete helle Bildstelle vorhanden ist.

Ein weiteres Verfahren zum Weißabgleich für Schwarz/Weiß-Scanner und für Farbscanner ist in der EP-A-0 281 659 angegeben, bei dem das wiederholte Anfahren eines Weißpunktes auf einer zu reproduzierenden Bildvorlage mit dem Abtastorgan vermieden wird. Dazu wird beim erstmaligen Weißabgleich ein Lichtabschwächungsfaktor durch optoelektronische Abtastung des Weißpunktes ermittelt. Bei Wiederholungen des Weißabgleichs wird ohne erneute Weißpunkt-Abtastung in der Bildvorlage das den Weißpunkt repräsentierende Abtastlicht durch das abgeschwächte Licht der Abtastlichtquelle simuliert, wobei die Lichtabschwächung mittels einer durch den ermittelten Lichtabschwächungsfaktor gesteuerten Irisblende erfolgt.

Das bekannte Verfahren basiert auf einer farbneutralen Dichtesimulation, was in der Praxis nicht immer gegeben ist und daher gelegentlich zu unbefriedigenden Ergebnissen führen kann.

Bei Schwarz/Weiß-Scannern zur Abtastung von Aufsichtsvorlagen ist es auch schon bekannt, für den Weißabgleich nicht die hellste Stelle der Aufsichtsvorlage, sondern das Referenzweiß eines Abgleichstreifens zu verwenden, das bei einem herkömmlichen Weißabgleich mindestens so hell wie die hellste Stelle der Aufsichtsvorlage sein muß. Ist beispielsweise das Referenzweiß dunkler als die hellste Stelle in der Aufsichtsvorlage und wird der Weißpegel auf das Referenzweiß des Abgleichsstreifens eingestellt, so ergibt sich bei der späteren Abtastung der hellsten Stelle in der Aufsichtsvorlage eine Signalbegrenzung auf den Weißpegel, und ein Informationsverlust ist die Folge. Da sich das Referenzweiß des Abgleichstreifens durch Vergilben und Verschmutzung verändert, kann es in nachteiliger Weise zu Abgleichfehlern kommen. Zur Vermeidung solcher Abgleichfehler ist es bisher erforderlich, die Abgleichstreifen von Zeit zu Zeit zu erneuern.

Aufgabe der vorliegenden Erfindung ist es daher, ein Verfahren zum Weißabgleich bei einem Abtastgerät zur punkt- und zeilenweisen, optoelektronischen Abtastung von Bildvorlagen derart zu verbessern, daß es mit geringem zeitlichen Aufwand ohne Informationsverlust durchführbar ist, um eine gute Reproduktionsqualität zu erreichen.

Diese Aufgabe wird durch die Merkmale des Anspruchs 1 gelöst.

Vorteilhafte Ausgestaltungen und Weiterbildungen sind in den Unteransprüchen angegeben.

Die Erfindung wird nachfolgend anhand der Fig. 1 bis 4 näher erläutert.

Es zeigen:

Fig. 1 ein prinzipielles Blockschaltbild einer Vorrichtung zur Durchführung eines Weißabgleichs bei einem Schwarz/Weiß-Scanner,

Fig. 2 ein Ablaufplan für das Verfahren zum Weißabgleich,

Fig. 3 eine graphische Darstellung und

Fig. 4 eine weitere graphische Darstellung.

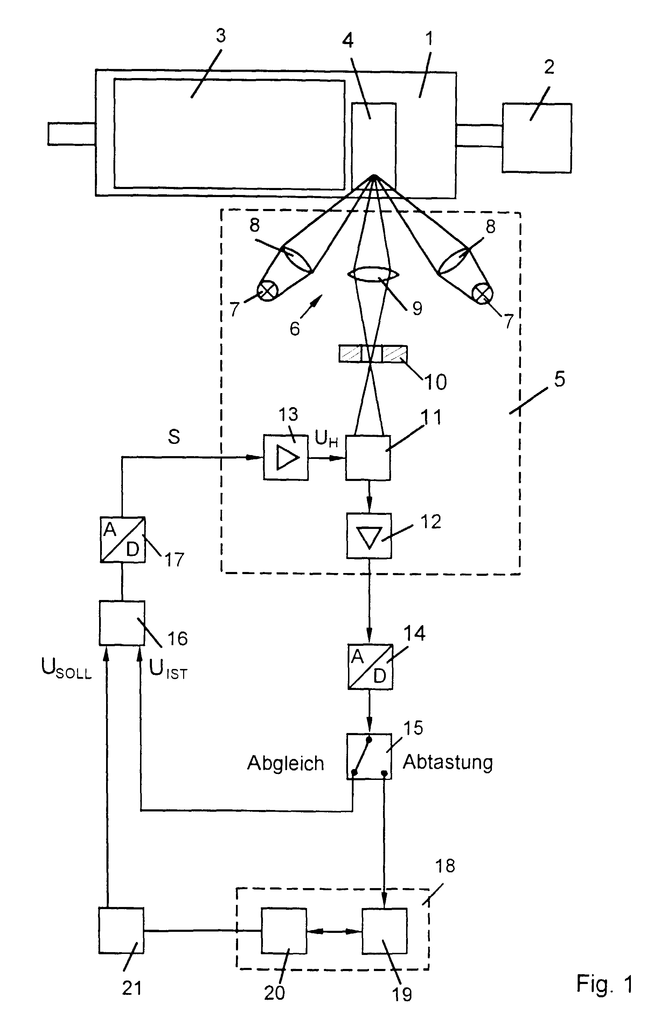

Fig. 1 zeigt ein prinzipielles Blockschaltbild einer Vorrichtung zur Durchführung eines Weißabgleichs in einem Schwarz/Weiß-Scanner. Eine Abtasttrommel (1) eines nicht näher dargestellten Schwarz/Weiß-Scanners wird von einem Motor (2) rotatorisch angetrieben. Auf der Abtasttrommel (1) ist eine abzutastende Bildvorlage (3) in Form einer Aufsichtsvorlage und daneben ein Abgleichstreifen (4) mit einem Referenzweiß für einen Weißabgleich angeordnet. Als Abgleichstreifen kann beispielsweise normales Papier mit einer mittleren Helligkeit verwendet werden. Bei der Vorlagenabtastung wird die Bildvorlage (3) von einem optoelektronisches Abtastorgan (5), das sich in axialer Richtung an der Abtasttrommel (1) entlang bewegt, bildpunkt- und zeilenweise abgetastet.

Zur punktweisen Beleuchtung der Bildvorlage (3) befindet sich in dem Abtastorgan (5) eine Abtastbeleuchtungs-Einrichtung (6) mit zwei Lichtquellen (7) und zwei Optiken (8).

Das von der Bildvorlage (3) reflektierte Abtastlicht, das entsprechend den Helligkeiten der in der abgetasteten Bildpunkte moduliert ist, gelangt in das Abtastorgan (5). Das Abtastlicht wird dort mittels eines Abtastobjektivs (9) auf eine Abtastblende (10) fokussiert und gelangt zu einer Licht/Spannungs-Wandlereinrichtung mit einem Photomultiplier (11) und einem nachgeschalteten Strom/Spannungs-Wandler (12), in dem der Ausgangsstrom des Photomultipliers (11) in ein analoges Bildsignal umgewandelt wird. Die Verstärkung des Photomultipliers (11) wird über die Hochspannung $U_H$ gesteuert, die in einem durch ein Steuersignal S steuerbaren Hochspannungsgenerator (13) erzeugt wird. Das in dem Strom/Spannungs-Wandler (12) erzeugte analoge Bildsignal wird in einem A/D-Wandler (14) mit einen Signalaussteuerungsbereich von Null bis zu einer maximalen Spannung $U_{max}$ in Bildwerte digitalisiert.

Die Bildwerte sind nach einer Logarithmierung ein Maß für die Dichten der abgetasteten Bildpunkte in der Bildvorlage (3) oder für die Dichte des Referenzweiß des Abgleichstreifens (4).

Dem A/D-Wandler (14) ist ein Umschalter (15) mit den Schaltstellungen "Abgleich" und "Abtastung" nachgeschaltet.

Während eines Weißabgleichs des Schwarz/ Weiß-Scanners befindet sich der Umschalter (15) in der Schaltstellung "Abgleich", in der das Abtastorgan (5) über dem Abgleichstreifen (4) positioniert ist. Der durch Ausmessen des Referenzweiß erzeugte Bildwert wird als Spanungs-Istwert $U_{IST}$ einem ersten Eingang eines digitalen Vergleicher (16) zugeführt, in dem der Spannungs-Istwert $U_{IST}$ mit einem an einem zweiten Eingang des digitalen Vergleichers (16) anliegenden Spannungs-Sollwert USOLL verglichen wird. Das Vergleichsergebnis wird über einen nachgeschalteten D/A-Wandler (17) in das Steuersignal S für den Hochspannungsgenerator (13) umgewandelt.

Während der Vorlagenabtastung befindet sich der Umschalter (15) in der Schaltstellung "Abtastung", in der die durch punkt- und zeilenweise Abtastung der Bildvorlage (3) gewonnenen Bildwerte zur Weiterverarbeitung einer Bildbearbeitungs-Stufe (18) zugeführt werden. Die Bildbearbeitungs-Stufe (18) besteht aus einem Bildspeicher (19) und einer mit dem Bildspeicher (19) kommunizierenden Vorlagenanalyse-Einheit (20). In der Vorlagenalyse-Einheit (20) wird aus den in dem Bildspeicher (19) gespeicherten Bildwerten der Bildvorlage (3) die Dichte $D_{WP}$ des Weißpunktes, der hellsten Stelle in der Bildvorlage (3), ermittelt.

Der in der Vorlagenanalyse-Einheit (20) ermittelte Weißpunkt-Dichte $D_{WP}$ wird einem Sollwert-Rechner (21) übergeben, in dem die Spannungs-Sollwerte $U_{SOLL}$ für den Weißabgleich berechnet werden.

Bei dem Weißabgleich vor der eigentlichen Abtastung der Bildvorlage (3) wird die Verstärkung der Licht/Spannungs-Wandlereinrichtung (11, 12) durch einen Vergleich von Spannungs-Istwerten $U_{IST}$ und Spannungs-Sollwerten $U_{SOLL}$ derart eingestellt, daß das Abtastorgan (5) bei der späteren Abtastung des Weißpunktes der Bildvorlage (3) einen maximalen Bildwert erzeugt, der einem vorgegebenen Weißpegel $U_{WP}$ entspricht. Zur vollen Ausnutzung des Aussteuerungsbereiches des A/D-Wandlers (14) wird der Weißpegel $U_{WP}$ in zweckmäßiger Weise auf die maximale Spannung $U_{max}$ des Aussteuerungsbereiches gesetzt.

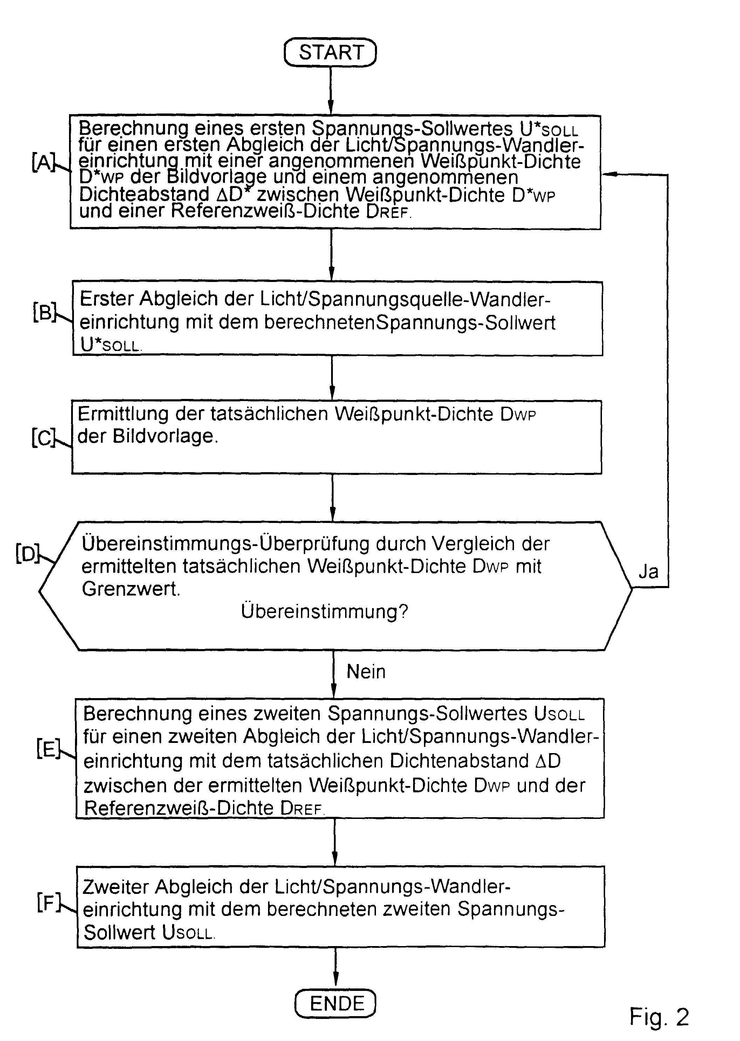

Das erfindungsgemäße Verfahren zum Weißabgleich wird nachfolgend anhand der Verfahrensschritte [A] bis [F], die in Fig. 2 in Form eines prinzipiellen Ablaufplanes dargestellt sind, näher erläutert.

Bei dem erfindungsgemäßen Verfahren zum Weißabgleich wird mittels des Abgleichstreifens (4) ein "Superweiß" als Referenzweiß erzeugt. Durch die Simulierung eines "Superweiß" kann in vorteilhafter Weise ein Abgleichstreifen (4) mit einer geringeren Helligkeit als die hellste Stelle der Bildvorlage (3) verwendet werden, wobei Helligkeitsänderungen im Abgleichstreifen (4) aufgrund von Vergilben und Verschmutzung einen nur sehr geringen Einfluß auf die Qualität des Weißabgleichs haben.

In einem Verfahrensschritt [A] wird in dem Sollwert-Rechner (21) ein erster Spannungs-Sollwert $U^*_{SOLL}$ für einen ersten Abgleich der Licht/Spannungs-Wandlereinrichtung (11, 12) berechnet.

Für die Berechnung des ersten Spannungs-Sollwertes $U^*_{SOLL}$ wird zunächst eine angenommene Weißpunkt-Dichte $D^*_{WP}$ der Bildvorlage (3), beispielsweise die Weißpunkt-Dichte $D^*_{WP} = 0$, ein angenommener Dichteabstand $\Delta D^*$ zwischen der nicht bekannten Referenzweiß-Dichte $D_{REF}$ des Abgleichstreifens (4) und der Weißpunkt-Dichte $D^*_{WP}$ gemäß Gleichung [1] sowie der Weißpegel $U_{WP}$ vorgegeben.

$$\Delta D^* = (D^*_{REF} - D^*_{WP}) \qquad [1]$$

Der erste Spannungs-Sollwert $U^*_{SOLL}$ errechnet sich nach Gleichung [2] wie folgt.

$$U^*_{SOLL} = U_{WP} \times 10 \exp. (-\Delta D^*) \qquad [2]$$

mit

$U_{WP}$ = Weißpegel und
$\Delta D^*$ = angenommener Dichteabstand

In einem Verfahrensschritt [B] wird mit dem im Verfahrenschritt [A] berechneten ersten Spannungs-Sollwert $U^*_{SOLL}$ ein erster Abgleich der Licht/Spannungs-Wandlereinrichtung (11, 12) bei Abtastung des Referenzweiß des Abgleichstreifens (4) mit dem Abtastorgan (5) durchgeführt. Der erste Abgleich wird derart vorgenommen, daß bei der Referenzweiß-Dichte $D_{REF}$, die sich aufgrund des angenommenen Dichteabstandes $\Delta D^*$ ergibt, ein dem berechneten ersten Spannungs-Sollwert $U^*_{SOLL}$ entsprechender Spannungswert und bei der angenommenen Weißpunkt-Dichte $D^*_{WP}$ der Weißpegel $U_{WP}$ erzeugt wird.

Dazu wird der in dem Sollwert-Rechner (21) berechnete erste Spannungs-Sollwert $U^*_{SOLL}$ an den zweiten Eingang des digitalen Vergleichers (16) gegeben. Das Abtastorgan (5) wird über dem Abgleichstreifen (4) positioniert, und der durch Ausmessen des Referenzweiß des Abgleichstreifens (4) erzeugte Spannungs-Istwert $U_{IST}$ gelangt über den Umschalter (15) in der Schaltstellung "Abgleich" an den ersten Eingang des digitalen Vergleichers (16). In Abhängigkeit von dem Vorzeichen des Steuersignals S wird die Verstärkung des Photomultipliers (11) über die Hochspannung $U_H$ solange erhöht oder erniedrigt, bis beim Steuersignal S = 0 der Spannungs-Istwert $U_{IST}$ gleich dem ersten Spannungs-Sollwert $U^*_{SOLL}$ ist. Die beim Steuersignal S erreichte Verstärkung des Photomultipliers (11) wird durch Speicherung eines entsprechenden Hochspannungswertes in dem Hochspannungs-Generator (13) bis zu einem nächsten Abgleich konstant gehalten.

Der bei dem ersten Abgleich der Licht/Spannungs-Wandlereinrichtung (11, 12) eingestellte Spannungswert U repräsentiert den angenommenen Dichteabstand $\Delta D^*$ bzw. die Referenzweiß-Dichte $D_{REF}$ des Abgleichstreifens (4).

In einem Verfahrensschritt [C] wird die tatsächliche Weißpunkt-Dichte $D_{WP}$ der Bildvorlage (3) mit dem im Verfahrenschritt [B] durchgeführten ersten Abgleich der Licht/Spannungs-Wandlereinrichtung (11, 12) ermittelt.

Die tatsächliche Weißpunkt-Dichte $D_{WP}$ kann durch manuelle densimetrische Ausmessung des Weißpunktes der Bildvorlage (3) mit dem Abtastorgan (5) oder durch eine automatische Analyse des Bildumfanges der Bildvorlage (3) anhand der durch punkt- und zeilenweise Abtastung der Bildvorlage (3) gewonnenen Bildwerte festgestellt werden.

Zur automatischen Analyse des Bildumfanges tastet das Abtastorgan (5) zunächst die Bildvorlage punkt- und zeilenweise ab. Die dabei gewonnenen Bildwerte werden über den Umschalter (15) in der Schaltstellung "Abtastung" in dem Bildspeicher (19) gespeichert. In der Vorlagenanalyse-Einheit (20) wird anhand der in dem Bildspeicher (19) abgelegten Bildwerte die tatsächliche Weißpunkt-Dichte $D_{WP}$ der Bildvorlage (3) ermittelt und an den Sollwert-Rechner (21) übergeben.

Die Vorlagenanalyse kann beispielsweise nach der DE-A-43 09 879 erfolgen. Die Bildwerte für die Vorlagenanalyse können durch eine Feinabtastung oder durch eine Grobabtastung der Bildvorlage (3) gewonnen werden. Bei der Feinabtastung wird die Bildvorlage (3) mit der für die Reproduktion erforderlichen Abtastfeinheit, bei der Grobabtastung mit einer entsprechend gröberen Abtastfeinheit und einer gegenüber der normalen Abtastblende (10) vergrößerten Abtastblende abgetastet.

In einem Verfahrensschritt [D] wird eine Übersteuerungs-Überprüfung durchgeführt, um eine Übersteuerung der Licht/Spannungs-Wandlereinrichtung (11, 12) nachgeschalteten Stufen, beispielsweise des A/D-Wandlers (14), zu verhindern.

Die Übersteuerungs-Überprüfung erfolgt in dem Sollwert-Rechner (21) durch einen Vergleich der im Verfahrenschritt [C] ermittelten tatsächlichen Weißpunkt-Dichte $D_{WP}$ mit einer Entscheidungsschwelle, die der angenommenen Weißpunkt-Dichte $D^*_{WP} = 0$ entspricht.

Die Übersteuerungs-Überprüfung dient dazu festzustellen, ob die tatsächliche Weißpunkt-Dichte $D_{WP}$ der Bildvorlage (3) einen kleineren oder größeren Dichteabstand $\Delta D$ als der im Verfahrensschritt [A] angenommene Dichteabstand $\Delta D^*$ hat.

Bei dem Vergleich der tatsächlichen Weißpunkt-Dichte $D_{WP}$ mit der angenommenen Weißpunkt-Dichte $D^*_{WP} = 0$ wird überprüft, ob die tatsächliche Weißpunkt-Dichte $D_{WP}$ größer oder gleich der angenommenen Weißpunkt-Dichte $D^*_{WP} = 0$.

Ist $D_{WP} > 0$, liegt keine Übersteuerung vor, und es schließt sich der Verfahrensschritt [E] an.

Ist $D_{WP} = 0$, kann der tatsächliche Weißpunkt der Bildvorlage (3) die angenommene Weißpunkt-Dichte $D^*_{WP} = 0$ haben oder aber um den angenommenen Dichteabstand $\Delta D^*$ heller als das Referenzweiß des Abgleichstreigens (4) sein, und eine Übersteuerung mit Informationsverlust bei der Vorlagenabtastung wäre die Folge.

Um eine Übersteuerung aufgrund eines fehlerhaften Weißabgleichs zu vermeiden, wird der im Verfahrenschritt [A] angenommene Dichteabstand $\Delta D^*$ schrittweise vergrößert und mit den derart korrigierten Dichteabständen $\Delta D^*$ jeweils die Verfahrenschritte [A] bis [D] in Routinen erneut durchlaufen, bis $D_{WP} > 0$ ist. Durch eine geeignete Wahl der korrigierten angenommenen Dichteabstände $\Delta D^*$ kann die Anzahl der durchlaufenden Routinen minimiert werden. Bei einem angenommenen Dichteabstand $\Delta D^* = 0{,}10$ kann der Dichteabstand $\Delta D^*$ beispielsweise schrittweise um 0,05 erhöht werden, so daß die Routinen nacheinander mit den Dichteabständen $\Delta D^* = 0{,}10$, $\Delta D^* = 0{,}15$, $\Delta D^* = 0{,}20$ u. s.w durchlaufen werden.

An die Übersteuerungs-Überprüfung schließt sich ein Verfahrensschritt [E] an.

In dem Verfahrensschritt [E] wird nach Gleichung [3] der tatsächliche Dichteabstand $\Delta D$ zwischen der Referenzweiß-Dichte $D_{REF}$ und der tatsächlichen Weißpunkt-Dichte $D_{WP}$ der Bildvorlage (3) festgestellt und der erste Spannungs-Sollwert ($U^*_{SOLL}$) in einen zweiten Spannungs-Sollwert $U_{SOLL}$ für einen zweiten Abgleich der Licht/Spannungs-Wandlereinrichtung (11, 12) nach Gleichung [4] korrigiert.

$$\Delta D = (D_{REF} - D_{WP}) \qquad [3]$$

Mit dem tatsächlichen Dichteabstand $\Delta D$ ergibt sich nach Gleichung [4] der zweite Spannungs-Sollwert USOLL für den zweiten Abgleich der Licht/Spannungs-Wandlereinrichtung (11 , 12) zu:

$$U_{SOLL} = U_{WP} \times 10 \exp (-\Delta D) \qquad [4]$$

In einem Verfahrensschritt [F] wird dann mit dem im Verfahrensschritt [E] ermittelten zweiten Spanungs-Sollwert $U_{SOLL}$ der zweite Abgleich der Licht/Spannungs-Wandlereinrichtung (11, 12) bei erneuter Abtastung des Referenzweiß des Abgleichstreifens (4) mit dem Abtastorgan (5) durchgeführt. Durch den zweiten Abgleich wird eine Verschiebung des ermittelten tatsächlichen Dichteabstandes $\Delta D$ derart vorgenommen, daß bei der Referenzweiß-Dichte $D_{REF}$, die sich aufgrund des verschobenen tatsächlichen Dichteabstandes $\Delta D$ ergibt,

ein dem berechneten zweiten Spannungs-Sollwert $U_{SOLL}$ entsprechender Spannungswert und bei der tatsächlichen Weißpunkt-Dichte $D_{WP}$, die aufgrund der Verschiebung des Dichteabstandes $\Delta D$ mit der angenommenen Weißpunkt-Dichte $D^*_{WP} = 0$ zusammenfällt, ein dem Weißpegel $U_{WP}$ entsprechender Spannungswert erzeugt wird.

Der zweite Abgleich läuft wie im Verfahrensschritt [B] beschrieben ab. Nach dem zweiten Abgleich ist der Weißabgleich des Schwarz/Weiß-Scanners abgeschlossen und die eigentliche Abtastung der Bildvorlage (3) für die Reproduktion kann beginnen.

Nachfolgend werden zwei Beispiele für einen Weißabgleich angegeben und anhand von graphischen Darstellungen erläutert.

Beispiel 1:

In dem Verfahrenschritt [A] möge die angenommene Weißpunkt-Dichte $D^*_{WP} = 0$, der angenommene Dichteabstand $\Delta D^* = 0{,}10$ und der Weißpegel $U_{WP} = 6$ V betragen. In diesem Fall wäre der Weißpunkt der Bildvorlage (3) um die Dichte 0,10 heller als das Referenzweiß des Abgleichstreifens (4). Der erste Spannungs-Sollwert für den ersten Abgleich ergibt sich dann nach Gleichung [1] zu $U^*_{SOLL} = 6 \times 10 \exp (-0{,}10) = 4{,}77$ V. Nach dem ersten Abgleich gemäß Verfahrenschritt [B] repräsentiert die Spannung U = 4,77 V eine Referenzweiß-Dichte $D_{REF} = 0{,}10$.

Im Verfahrensschritt [C] möge die tatsächliche Weißpunkt-Dichte $D_{WP} = 0{,}03$ ermittelt worden sein. In diesem Fall ist der tatsächliche Weißpunkt der Bildvorlage (3) um die Dichte 0,03 dunkler als der angenommene Weißpunkt mit der Dichte $D^*_{WP} = 0$. Damit ergibt sich ein kleinerer Dichteabstand $\Delta D = (D_{REF} - D_{WP}) = 0{,}10 - 0{,}03 = 0{,}07$ des tatsächlichen Weißpunktes der Bildvorlage (3) von dem Referenzweiß des Abgleichstreifens (4) als der angenommene Dichteabstand $\Delta D^* = 0{,}10$.

Die Übersteuerungs-Überprüfung nach Verfahrensschritt [D] ergibt, daß bei der ermittelten tatsächlichen Weißpunkt-Dichte $D_{WP} = 0{,}03$ der Bildvorlage (3) keine Übersteuerung vorliegt, da $D_{WP} > 0$ ist.

Nach Verfahrenschritt [E] wird der zweite Spannungs-Sollwert für den zweiten Abgleich mit dem tatsächlichen Dichteabstand $\Delta D = 0{,}07$ zu $U_{SOLL} = 6 \times 10 \exp (-0{,}07) = 5{,}11$ V berechnet. Nach dem zweiten Abgleich gemäß Verfahrensschritt [E] ist eine Verschiebung des tatsächlichen Dichteabstandes $\Delta D$ derart erfolgt, daß deR tatsächlichen Weißpunkt-Dichte $D_{WP} = 0{,}03$ jetzt die angenommene Weißpunkt-Dichte $D^*_{WP} = 0$ und damit der Weißpegel $U_{WP} = 6$ V zugeordnet ist.

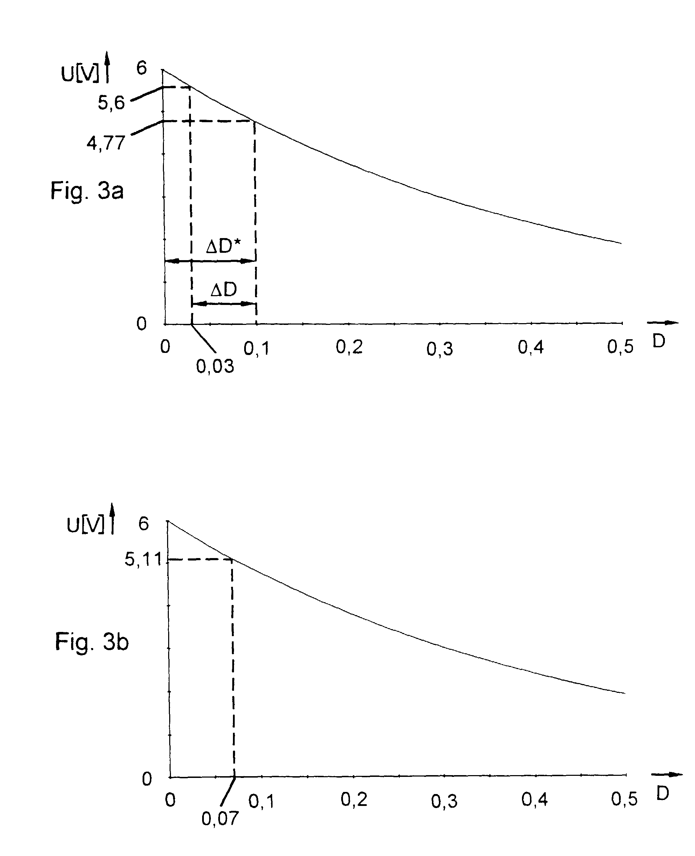

Fig. 3a zeigt in einer grafischen Darstellung die Funktion U = f (D) nach dem ersten Abgleich mit dem angenommenen Dichteabstand von $\Delta D^* = 0{,}10$. Der erste Abgleich erfolgte in der Weise, daß die Spannung U = 4,77 V bei der Referenzweiß-Dichte $D_{REF} = 0{,}10$ kleiner als der vorgegebene Weißpegel $U_{WP} = 6$ V ist und daß die Spannung U bei der angenommenen Weißpunkt-Dichte $D^*_{WP} = 0$ dem Weißpegel $U_{WP} = 6$ V entspricht. Gleichzeitig ist die ermittelte tatsächliche Weißpunkt-Dichte $D_{WP} = 0,03$ der Bildvorlage (3) und der sich daraus ergebende, kleinere Dichteabstand $\Delta D = 0,07$ eingetragen. Es ist ersichtlich, daß bei der tatsächlichen Weißpunkt-Dichte $D_{WP} = 0,03$ nicht der Weißpegel $U_{WP} = 6$ V, sondern eine kleinere Spannung $U = 5,60$ V erreicht wird, so daß der zur Verfügung stehende Aussteuerungsbereich bis $U_{WP} = 6$ V nicht voll genutzt wird.

Fig. 3b zeigt in einer weiter grafischen Darstellung die Funktion $U = f(D)$ nach dem zweiten Abgleich, durch den aufgrund der Verschiebung des tatsächlichen Dichteabstandes $\Delta D = 0,07$ erreicht wurde, daß der tatsächlichen Weißpunkt-Dichte $D_{WP} = 0,03$ jetzt die angenommene Weißpunkt-Dichte $D^*_{WP} = 0$ und damit der Weißpegel $U_{WP} = 6$ V zugeordnet ist, wodurch eine volle Aussteuerung gewährleistet ist.

Beispiel 2:

In dem Verfahrenschritt [A] möge wiederum die angenommene Weißpunkt-Dichte $D^*_{WP} = 0$, der angenommene Dichteabstand $\Delta D^* = 0,10$ und der Weißpegel $U_{WP} = 6$ V betragen. Der erste Spannungs-Sollwert für den ersten Abgleich ergibt sich dann ebenfalls zu $U^*_{SOLL} = 6 \times 10 \exp(-0,10) = 4,77$ V.

Im Verfahrensschritt [C] möge die tatsächliche Weißpunkt-Dichte $D_{WP} = 0$ ermittelt worden sein. Damit ergibt sich ein Dichteabstand $\Delta D = 0$ oder aber ein größerer Dichteabstand $\Delta D$.

Die Übersteuerungs-Überprüfung nach Verfahrensschritt [D] ergibt, daß bei der ermittelten tatsächlichen Weißpunkt-Dichte $D_{WP} = 0$ der Bildvorlage (3) eine Übersteuerung vorliegt, da $D_{WP} = 0$ ist.

In diesem Fall werden die Verfahrensschritte [A] bis [D] wiederholt. Dazu wird der angenommene Dichteabstand $\Delta D^* = 0,1$ um beispielsweise 0,05 auf 0,15 erhöht und mit dem vergrößerten Dichteabstand $\Delta D^* = 0,15$ ein neuer Spannungs-Sollwert zu $U_{SOLL} = 4,25$ V berechnet. Mit diesem neuen ersten Spannungs-Sollwert $U_{SOLL} = 4,25$ V wird ein neuer erster Abgleich durchgeführt und anschließend die neue tatsächliche Weißpunkt-Dichte $D_{WP}$, beispielsweise zu $D_{WP} = 0,02$, ermittelt. Bei der Übersteuerungs-Überprüfung ergibt sich jetzt, daß keine Übersteuerung mehr vorliegt, da $D_{WP} = 0,02 >= 0$ ist. Nach der Übersteuerungs-Überprüfung wird dann gemäß Verfahrenschritt [E] der zweite Spannungs-Sollwert für den zweiten Abgleich mit dem tatsächlichen Dichteabstand $\Delta D = 0,15 - 0,22 = 0,13$ zu $U_{SOLL} = 6 \times 10 \exp(-0,13) = 4,45$ V berechnet und der zweite Abgleich durchgeführt.

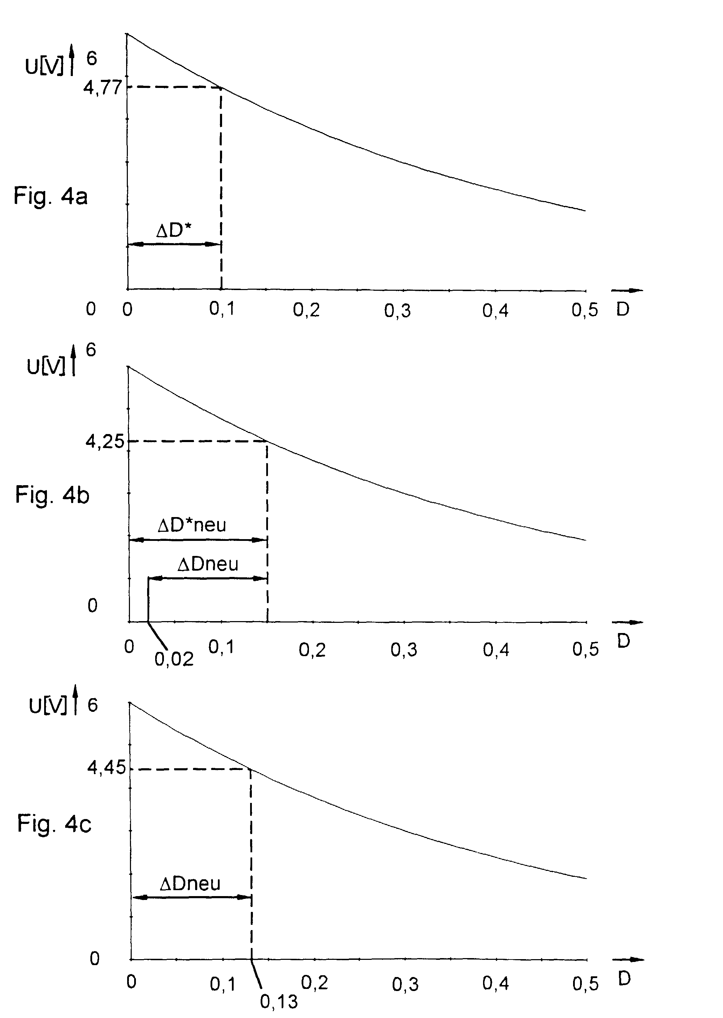

Fig. 4a zeigt die Funktion $U = f(D)$ nach dem ersten Abgleich mit dem angenommenen Dichteabstand von $\Delta D^* = 0,10$. Der erste Abgleich erfolgte in der Weise, daß die Spannung $U = 4,77$ V bei der Referenzweiß-Dichte $D_{REF} = 0,10$ kleiner als der vorgegebene Weißpegel $U_{WP} = 6$ V ist und daß die Spannung U bei der angenommemen Weißpunkt-Dichte $D^*_{WP} = 0$ dem Weißpegel $U_{WP} = 6$ V entspricht. Gleichzeitig ist die ermittelte tatsächliche Weißpunkt-Dichte $D_{WP} = 0$ eingetragen.

Fig.4b zeigt die Funktion $U = f(D)$ nach dem aufgrund der Übersteuerungs-Überprüfung wiederholten ersten Abgleich mit einem vergrößerten Dichteabstand $\Delta D = 0,15$ und der danach ermittelten neuen tatsächlichen Weißpunkt-Dichte $D_{WP} = 0,02$.

Fig. 4c zeigt die Funktion $U = f(D)$ nach dem zweiten Abgleich. Durch den zweiten Abgleich wurde aufgrund der Verschiebung des tatsächlichen Dichteabstandes $\Delta D = 0,13$ erreicht, daß der tatsächlichen Weißpunkt-Dichte $D_{WP} = 0,02$ jetzt der angenommenen Weißpunkt-Dichte $D^*_{WP} = 0$ und damit dem Weißpegel $U_{WP} = 6$ V zugeordnet ist.

Es liegt im Rahmen der Erfindung, daß für einen Schwarz/Weiß-Scanner beschrieben Verfahren zum Weißabgleich auch bei einem Farb-Scanner anzuwenden. In diesem Fall sind die einzelnen Verfahrensschritte auf jeden der Farbkanäle anzuwenden.

## Patentansprüche

1. Verfahren zum Weißabgleich eines optoelektronischen Abtastorgans eines Abtastgerätes zur bildpunkt- und zeilenweisen Abtastung einer Bildvorlage und zur Umwandlung des mit die Dichten der abgetasteten Bildpunkte modulierten Abtastlichtes in einer Licht/Spannungs-Wandlereinrichtung in Bildwerte, bei dem ein Weißpegel vorgegeben und der Weißabgleich mittels eines Referenzweiß durch Änderung der Verstärkung der Licht/Spannungs-Wandlereinrichtung derart vorgenommen wird, daß der bei Abtasten der hellsten Stelle der Bildvorlage, dem Weißpunkt, erzeugte Bildwert dem Weißpegel entspricht, **dadurch gekennzeichnet,** daß

    a) eine Dichte ($D^*_{WP}$) des Weißpunktes der Bildvorlage (3) und ein Dichteabstand ($\Delta D^*$) zwischen der Dichte ($D_{REF}$) des Referenzweiß und der Dichte ($D^*_{WP}$) des Weißpunktes der Bildvorlage (3) vorgegeben wird,

    b) aus dem vorgegebenen Dichteabstand ($\Delta D^*$) und aus einem vorgegebenen Weißpegel ($U_{WP}$) ein erster Spannungs-Sollwert ($U^*_{SOLL}$) für einen ersten Abgleich der Licht/Spannungs-Wandlereinrichtung (11, 12) gemäß der Gleichung:

$$U^*_{SOLL} = U_{WP} \times 10 \exp(-\Delta D^*)$$

    berechnet wird,

    c) der erste Abgleich durchgeführt wird, indem das Referenzweiß mit dem Abtastorgan (5) ausgemessen und der durch Ausmessen erzeugte Bildwert durch Änderung der Verstärkung der Licht/Spannungs-Wandlereinrichtung (11, 12) auf den berechneten ersten Spannungs-Sollwert ($U^*_{SOLL}$) eingestellt wird,

d) die tatsächliche Weißpunkt-Dichte ($D_{WP}$) der Bildvorlage (3) mit dem Abtastorgan (5) bei der im ersten Abgleich eingestellten Verstärkung der Licht/Spannungs-Wandler-Einrichtung (11, 12) festgestellt wird,

e) der tatsächliche Dichteabstand ($\Delta D$) zwischen der Referenzweiß-Dichte ($D_{REF}$) und der tatsächlichen Weißpunkt-Dichte ($D_{WP}$) der Bildvorlage (3) bei der im ersten Abgleich eingestellten Verstärkung der Licht/Spannungs-Wandler-Einrichtung (11, 12) ermittelt und der erste Spannungs-Sollwert ($U^*_{SOLL}$) entsprechend dem tatsächlichen Dichteabstand ($\Delta D$) in einen zweiten Spannungs-Sollwert ($U_{SOLL}$) für einen zweiten Abgleich der Licht/Spannungs-Wandlereinrichtung (11, 12) gemäß der Gleichung:

$$U_{SOLL} = U_{WP} \times 10 \exp. (-\Delta D)$$

korrigiert wird und

f) der zweite Abgleich durchgeführt wird, indem das Referenzweiß mit dem Abtastorgan (5) erneut ausgemessen und der durch Ausmessen erzeugte Bildwert durch Änderung der Verstärkung der Licht/Spannungs-Wand-lereinrichtung (11, 12) auf den berechneten zweiten Spannungs-Sollwert ($U_{SOLL}$) eingestellt wird.

2. Verfahren nach Anspruch 1, **dadurch gekennzeichnet,** daß als Referenzweiß ein Abgleichstreifen (4) mittlerer Helligkeit verwendet wird

3. Verfahren nach Anspruch 2, **dadurch gekennzeichnet,** daß als Abgleichstreifen (4) normales Papier verwendet wird.

4. Verfahren nach einem der Ansprüche 1 bis 3, **dadurch gekennzeichnet,** daß die vorgegebene Weißpunkt-Dichte ($D^*_{WP}$) Null ist.

5. Verfahren nach einem der Ansprüche 1 bis 4, **dadurch gekennzeichnet,** daß die tatsächliche Weißpunkt-Dichte ($D_{WP}$) der Bildvorlage (3) durch Ausmessen des Weißpunktes, der hellsten Stelle der Bildvorlage (3), mit dem Abtastorgan (5) ermittelt wird.

6. Verfahren nach einem der Ansprüche 1 bis 5, **dadurch gekennzeichnet,** daß

- die Bildvorlage (3) bildpunkt- und zeilenweise abgetastet und die Bildwerte gespeichert werden und

- die tatsächliche Weißpunkt-Dichte ($D_{WP}$) durch eine automatische Vorlagenanalyse anhand der gespeicherten Bildwerte ermittelt wird.

7. Verfahren nach Anspruch 6, **dadurch gekennzeichnet,** daß die Bildvorlage (3) mit einer gegenüber der normalen Abtastfeinheit gröberen Abtastfeinheit abgetastet wird.

8. Verfahren nach einem der Ansprüche 1 bis 7, **dadurch gekennzeichnet,** daß

- die im Schritt d) ermittelte tatsächliche Weißpunkt-Dichte ($D_{WP}$) der Bildvorlage (3) mit einer Entscheidungsschwelle verglichen wird,

- falls die tatsächliche Weißpunkt-Dichte ($D_{WP}$) der Bildvorlage (3) größer als die Entscheidungsschwelle ist, der zweite Abgleich gemäß Schritt f) durchgeführt wird und

- falls die tatsächliche Weißpunkt-Dichte ($D_{WP}$) der Bildvorlage (3) gleich der Entscheidungsschwelle ist, die Schritte a) bis d) mit schrittweise vergrößertem vorgegebenen Dichteabstand ($\Delta D^*$) wiederholt werden, bis die tatsächliche Weißpunkt-Dichte ($D_{WP}$) der Bildvorlage (3) größer als die Entscheidungsschwelle ist.

9. Verfahren nach Anspruch 8 **dadurch gekennzeichnet,** daß die Entscheidungsschwelle der Weißpunkt-Dichte ($D_{WP}$) Null entspricht.

10. Verfahren nach einem der Ansprüche 1 bis 9, **dadurch gekennzeichnet,** daß das Verfahren zum Weißabgleich auf jeden der Farbkanäle eines Farbscanners zur punkt- und zeilenweisen optoelektronischen Abtastung von farbigen Bildvorlagen angewendet wird.

**Claims**

1. A method for the white adjustment of an optoelectronic scanning member of a scanning apparatus for the scanning by image point and by line of an image original and for the conversion of the scanning light modulated with the densities of the scanned image points in a light/voltage converter device into image values, in which a white level is given and the white adjustment is carried out by means of a reference white by altering the intensification of the light/voltage converter device such that the image value produced on scanning the brightest site of the image original, the white point, corresponds to the white level,

**characterised in that**

a) a density ($D^*_{WP}$) of the white point of the image original (3) and a density interval (AD*) between the density ($D_{REF}$) of the reference white and the density ($D^*_{WP}$) of the white point of the image original (3) is given,

b) from the given density interval (AD*) and from a given white level ($U_{WP}$) a first voltage nominal value ($U^*_{SOLL}$) is calculated for a first adjustment of the light/voltage converter device (11, 12) according to the equation:

$$U^*_{SOLL} = U_{WP} \times 10 \text{ exp. } (-\Delta D^*),$$

c) the first adjustment is carried out, by the reference white being measured with the scanning member (5) and the image value generated by measuring being set by altering the intensification of the light/voltage converter device (11, 12) to the calculated first voltage nominal value ($U^*_{SOLL}$),

d) the actual white point density ($D_{WP}$) of the image original (3) is established with the scanning member (5) with the intensification of the light/voltage converter device (11, 12) which is set in the first adjustment,

e) the actual density interval ($\Delta D$) between the reference white density $D_{REF}$) and the actual white point density ($D_{WP}$) of the image original (3) is determined in the intensification of the light/voltage converter device (11, 12) set in the first adjustment, and the first voltage nominal value ($U^*_{SOLL}$) corresponding to the actual density interval ($\Delta D$) is corrected into a second voltage nominal value ($U_{SOLL}$) for a second adjustment of the light/voltage converter device (11, 12) according to the equation:

$$U_{SOLL} = U_{WP} \times 10 \text{ exp. } (-\Delta D)$$

and

f) the second adjustment is carried out by the reference white being measured again with the scanning member (5) and the image value generated by measuring through altering the intensification of the light/voltage converter device (11, 12) being set to the calculated second voltage nominal value ($U_{SOLL}$).

2. The method according to Claim 1, **_characterised in that_** as reference white an adjustment strip (4) of medium brightness is used.

3. The method according to Claim 2, **_characterised in that_** normal paper is used as adjustment strip (4).

4. The method according to one of Claims 1 to 3, **char-**

**acterised in that** the given white point density ($D^*_{WP}$) is zero.

5. The method according to one of Claims 1 to 4, **characterised in that** the actual white point density ($D_{WP}$) of the image original (3) is determined by measurement of the white point, the brightest site of the image original (3), with the scanning member (5).

6. The method according to one of Claims 1 to 5, **characterised in that**

- the image original (3) is scanned by image point and by line and the image values are stored and
- the actual white point density ($D_{WP}$) is determined by an automatic original analysis with the aid of the stored image values.

7. The method according to Claim 6, **characterised in that** the image original (3) is scanned with a coarser degree of scanning definition compared with the normal scanning definition.

8. The method according to one of Claims 1 to 7, **characterised in that**

- the actual white point density ($D^*_{WP}$) of the image original (3), determined in step d), is compared with a decision threshold,
- if the actual white point density ($D^*_{WP}$) of the image original (3) is greater than the decision threshold, the second adjustment is carried out according to step f) and
- if the actual white point density ($D^*_{WP}$) of the image original (3) is identical to the decision threshold, the steps a) to d) are repeated with a gradually increased given density interval ($\Delta D^*$) until the actual white point density ($D_{WP}$) of the image original (3) is greater than the decision threshold.

9. The method according to Claim 8, **characterised in that** the decision threshold of the white point density ($D_{WP}$) corresponds to zero.

10. The method according to one of Claims 1 to 9, **characterised in that** the method for white adjustment is applied to each of the colour channels of a colour scanner for the optoelectronic scanning by point and by line of coloured image originals.

**Revendications**

1. Procédé de compensation du blanc d'un organe de détection optoélectronique d'un appareil de détection pour la détection point par point et ligne par ligne d'une image modèle et pour la conversion de la lumière de détection modulée par les densités des points images détectés dans un convertisseur lumière/tension en des valeurs d'images, procédé selon lequel on prédétermine un niveau de blanc et on effectue une compensation du blanc à l'aide d'un blanc de référence en modifiant l'amplification du convertisseur lumière/tension pour qu'à la détection des points clairs de l'image modèle, le point blanc, génère une valeur d'image qui correspond au niveau de blanc, caractérisé en ce que

a- on prédétermine une densité ($D^*_{WP}$) du point blanc de l'image modèle (3) et un intervalle de densité ($\Delta D^*$) entre la densité du blanc de référence ($D_{REF}$) et la densité ($D^*_{WP}$) du point blanc de l'image modèle (3),

b- à partir de l'intervalle de densité prédéterminé ($\Delta D^*$) et d'un niveau de blanc prédéterminé ($U_{WP}$), on calcule une première valeur de consigne de tension ($U^*_{SOLL}$) pour une première compensation du convertisseur lumière/tension (11, 12) selon l'équation suivante :

$$U^*_{SOLL} = U_{WP} \times 10 \text{ exp. } (-\Delta D^*)$$

c- on effectue la première compensation en mesurant le blanc de référence avec l'organe de détection (5) et en réglant la valeur image générée par la mesure en modifiant l'amplification du convertisseur lumière/tension (11, 12) sur la première valeur de consigne de tension ($U^*_{SOLL}$) calculée,

d- on détermine la densité de point blanc effective ($D_{WP}$) de l'image modèle (3) avec l'organe de détection (5) pour laquelle on constate l'amplification réglée au cours de la première compensation du convertisseur lumière/tension (11, 12),

e- on détermine l'intervalle de densité effectif ($\Delta D$) entre la densité du blanc de référence ($D_{REF}$) et la densité du point blanc, effectif ($D_{WP}$) de l'image modèle (3) pour lequel, lors de la première compensation on a l'amplification réglée du convertisseur lumière/tension (11, 12) et on corrige la première valeur de consigne de tension ($U^*_{SOLL}$) en fonction de la distance de densité effective ($\Delta D$) pour obtenir une seconde valeur de consigne de tension ($U_{SOLL}$) pour une seconde compensation du convertisseur lumière/tension (11, 12) selon l'équation suivante :

$$U_{SOLL} = U_{WP} \times 10 \text{ exp. } (-\Delta D)$$

f- on effectue la seconde compensation en mesurant de nouveau le blanc de référence avec l'organe de détection (5) et on règle la valeur d'image générée par la mesure en modifiant l'amplification du convertisseur lumière/tension (11, 12) sur la seconde valeur de consigne de tension ($U_{SOLL}$), calculée.

2. Procédé selon la revendication 1, caractérisé en ce que le blanc de référence est une bande de compensation (4) de luminosité moyenne.

3. Procédé selon la revendication 2, caractérisé en ce que la bande de compensation (4) est du papier normal.

4. Procédé selon l'une des revendications 1 à 3, caractérisé en ce que la densité prédéterminée du point blanc ($D^*_{WP}$) est nulle.

5. Procédé selon l'une des revendications 1 à 4, caractérisée en ce que la densité du point blanc effectif ($D_{WP}$) de l'image modèle (3) se détermine en mesurant le point blanc de l'endroit le plus clair de l'image modèle (3) avec l'organe de détection (5).

6. Procédé selon l'une des revendications 1 à 5, caractérisé en ce que

- on détecte l'image modèle (3) point par point et ligne par ligne et on mémorise les valeurs d'images et
- on détermine la densité du point blanc effective ($D_{WP}$) par une analyse automatique du modèle à l'aide des valeurs d'images enregistrées.

7. Procédé selon la revendication 6, caractérisé en ce que l'image modèle (3) est détectée avec une finesse de détection plus grossière que celle d'une unité de détection normale.

8. Procédé selon l'une des revendications 1 à 7, caractérisé en ce que

- on compare la densité du point blanc ($D_{WP}$) effective déterminée dans l'étape (d) pour l'image modèle (3) à un seuil de décision,
- si la densité du point blanc effective ($D_{WP}$) de l'image modèle (3) est supérieure au seuil de décision on effectue la seconde compensation selon l'étape (f),
- si la densité du point blanc effective ($D_{WP}$) de l'image modèle (3) est égale au seuil de décision, on répète les étapes (a)...(d) avec une dis-

tance de densité ($\Delta D^*$) prédéterminée que l'on augmente pas à pas jusqu'à ce que la densité du point blanc effective ($D_{WP}$) de l'image modèle (3) est supérieure au seuil de décision.

9. Procédé selon la revendication 8,
caractérisé en ce que
le seuil de décision de la densité du point blanc ($D_{WP}$) est égale à zéro.

10. Procédé selon les revendications 1 à 9,
caractérisé en ce que
le procédé de compensation du blanc est appliqué à chacun des canaux de couleurs d'un scanner de couleurs pour la détection optoélectronique point par point et ligne par ligne des images modèles en couleurs.

Fig. 1

$$\boxed{\text{START}}$$

[A] Berechnung eines ersten Spannungs-Sollwertes $U^*_{SOLL}$ für einen ersten Abgleich der Licht/Spannungs-Wandler-einrichtung mit einer angenommenen Weißpunkt-Dichte $D^*_{WP}$ der Bildvorlage und einem angenommenen Dichteabstand $\Delta D^*$ zwischen Weißpunkt-Dichte $D^*_{WP}$ und einer Referenzweiß-Dichte $D_{REF}$.

[B] Erster Abgleich der Licht/Spannungsquelle-Wandler-einrichtung mit dem berechnetenSpannungs-Sollwert $U^*_{SOLL}$.

[C] Ermittlung der tatsächlichen Weißpunkt-Dichte $D_{WP}$ der Bildvorlage.

[D] Übereinstimmungs-Überprüfung durch Vergleich der ermittelten tatsächlichen Weißpunkt-Dichte $D_{WP}$ mit Grenzwert.

Übereinstimmung?

Ja

Nein

[E] Berechnung eines zweiten Spannungs-Sollwertes $U_{SOLL}$ für einen zweiten Abgleich der Licht/Spannungs-Wandler-einrichtung mit dem tatsächlichen Dichtenabstand $\Delta D$ zwischen der ermittelten Weißpunkt-Dichte $D_{WP}$ und der Referenzweiß-Dichte $D_{REF}$.

[F] Zweiter Abgleich der Licht/Spannungs-Wandler-einrichtung mit dem berechneten zweiten Spannungs-Sollwert $U_{SOLL}$.

$$\boxed{\text{ENDE}}$$

Fig. 2

Fig. 3a

Fig. 3b

Fig. 4a

Fig. 4b

Fig. 4c